# EUROPEAN PATENT APPLICATION

(11) **EP 4 790 449 A1**
(43) Date of publication of application: **12.08.2026**
(21) Application number: 24874774.3
(22) Date of filing: 04.10.2024
(51) Int. Cl.: G01S 7/481

(54) **UNDERWATER MONITORING DEVICE AND UNDERWATER MONITORING METHOD**

(30) Priority: 05.10.2023 JP 2023173937
(71) Applicant: Trimatiz Limited, Ichikawa-shi, Chiba, 272-0023 (JP)
(72) Inventor: TEZUKA, Koichi, Ichikawa-shi, Chiba 272-0023 (JP); OKUZAWA, Hiroki, Ichikawa-shi, Chiba 272-0023 (JP); KAWABATA, Chihiro, Ichikawa-shi, Chiba 272-0023 (JP)
(74) Representative: Plasseraud IP
(86) International application number: PCT/JP2024/035682
(87) International publication number: WO 2025/075175

(57) **Abstract**

[Problem]

To provide an underwater monitoring device and an underwater monitoring method capable of accommodating various situations and having high measurement accuracy, considering the turbidity in water.

[Solution]

An underwater monitoring device according to one aspect of the present invention comprises: a light irradiation component configured to irradiate a plurality of laser beams in a visible region;a plurality of light-receiving components configured to receive reflected light of each of the plurality of laser beams in the visible region irradiated by the light irradiation component; andan imaging component configured to capture an image of a forward region. Furthermore, an underwater monitoring method according to another aspect of the present invention comprises: irradiating a plurality of laser beams in a visible region; receiving reflected light of each of the plurality of laser beams; and selecting part of the plurality of reflected light as measurement light, wherein the plurality of laser beams in the visible region are irradiated while being scanned, and image data of a forward region are acquired during an interval in the scanning.

## Description

### [Technical Field]

The present invention relates to an underwater monitoring device and an underwater monitoring method.

### [Background of invention]

LiDAR (Light Detection and Ranging), which uses light, is frequently used as a technology for measuring objects to be measured located at a distance. LiDAR is a technology that irradiates light onto an object to be measured, measures the light that is reflected by scattering, and performs various measurements based on the information obtained from this measurement.

While LiDAR is commonly used on land, there has been a demand to apply this technology underwater as well.

Technology related to underwater LiDAR is described, for example, in the following Patent Documents 1 to 3 and Non-Patent Document 1.

### [Prior Art Documents]

### [Patent Documents]

### [Patent Documents]

[Patent Document 1] Japanese Unexamined Patent Application Publication No. 2011-196955 A
[Patent Document 2] Japanese Unexamined Patent Application Publication No. 2017-228889 A
[Patent Document 3] Japanese Unexamined Patent Application Publication No. H4-103232 A

### [Non-Patent Document]

[Non-Patent Document 1] https://www.vision-systems.com/cameras-accessories/article/14037190/3d-laser-scanner-system-targets-underwater-inspection-applications

### [Summary of invention]

### [Problem to be Solved by invention]

In actual underwater measurements, turbidity varies depending on factors such as various suspended and dissolved substances. Because the type and amount of these substances vary greatly depending on the measurement location, it is necessary to respond appropriately to these various conditions. Furthermore, since the reflectance of the object to be measured varies depending on the wavelength, there is also the problem that the measurement accuracy varies.

However, none of the technologies described in Patent Documents 1 to 3 and Non-Patent Document 1 consider the turbidity in the water, leaving issues with measurement accuracy.

In view of the above-mentioned problems, the present invention aims to provide an underwater monitoring device and an underwater monitoring method that take into account factors such as underwater turbidity, are adaptable to a variety of situations, and have high measurement accuracy.

### [Means for Solving the Problem]

One aspect of the present invention that solves the above problems is an underwater monitoring device that includes a light irradiation component that irradiates a plurality of laser beams in the visible region, a plurality of light-receiving components that receive light reflected from each of the plurality of laser beams in the visible region irradiated by the light irradiation component, and an imaging component that captures a forward region.

Furthermore, in this aspect, although not limited thereto, it is preferable that the plurality of light irradiation components be disposed within a region surrounded by the plurality of light-receiving components and the imaging component.

Furthermore, in this respect, although not limited thereto, it is preferable that the laser beam has a wavelength in the range of 360 nm or more and 830 nm or less.

Also, in this respect, although not limited thereto, the light irradiation component preferably comprises an optical scanning component.

Furthermore, in this respect, although not limited thereto, it is preferable that the imaging component is an RGB camera.

Furthermore, in this aspect, although not limited thereto, it is preferable that the underwater monitoring device further includes a control component configured to control the light irradiation component, the plurality of light-receiving components, and the imaging component.

In addition, an underwater monitoring method according to another aspect of the present invention irradiates a plurality of laser beams in the visible region, receives light reflected from each of the laser beams in the visible region, and selects at least some of the reflected light from the plurality of received reflected light beams as measurement light.

Furthermore, in this respect, although not limited thereto, it is preferable to select the said reflected light having the highest signal strength as the said measurement light.

In addition, an underwater monitoring method according to another aspect of the present invention irradiates laser beams in the visible region while being scanned, and acquires image data of a forward region at intervals of the scanning.

Furthermore, in this respect, although not limited thereto, said scanning is preferably raster scanning.

Furthermore, although not limited to this aspect, it is preferable that the laser beam in the visible region is pulsed light.

### [Effect of invention]

As described above, the present invention can provide an underwater monitoring device and an underwater monitoring method that take into account the turbidity in water, can handle various turbidity conditions, and has high measurement accuracy.

### [Brief description of drawings]

[FIG.1] FIG. 1 is a schematic diagram of an underwater monitoring device 1 according to an embodiment.
[FIG.2] FIG. 2 is a front view of the underwater monitoring device 1 according to the embodiment.
[FIG.3] FIG. 3 is a schematic diagram showing a cross section of an underwater monitoring device 1 according to an embodiment.
[FIG.4] FIG. 4 is a functional block diagram of an underwater monitoring device 1 according to an embodiment.
[FIG.5] FIG. 5 is a graph showing the wavelength dependence of light transmittance in water.
[FIG.6] FIG. 6 is a graph showing the wavelength dependence of light transmittance in water.
[FIG.7] FIG. 7 is a functional block diagram of a control component of an underwater monitoring device according to an embodiment.
[FIG.8] FIG. 8 is a timing chart illustrating an example of a waveform of light irradiation control signal according to the embodiment.
[FIG.9] FIG. 9 is a diagram illustrating an example of scanning of light irradiated by an underwater monitoring device according to an embodiment.
[FIG.10] FIG. 10 is a diagram illustrating an example of scanning of light irradiated by an underwater monitoring device according to an embodiment.
[FIG.11]FIG. 11 is a diagram illustrating an example of scanning of light irradiated by an underwater monitoring device according to an embodiment.
[FIG.12] FIG. 12 is a diagram illustrating an example of scanning of light irradiated by an underwater monitoring device according to an embodiment.

### [Detailed Description]

Hereinafter, embodiments of the present invention will be described in detail with reference to the accompanying drawings. However, the present invention can be embodied in many different forms and is not limited to the specific examples shown in the following embodiments.

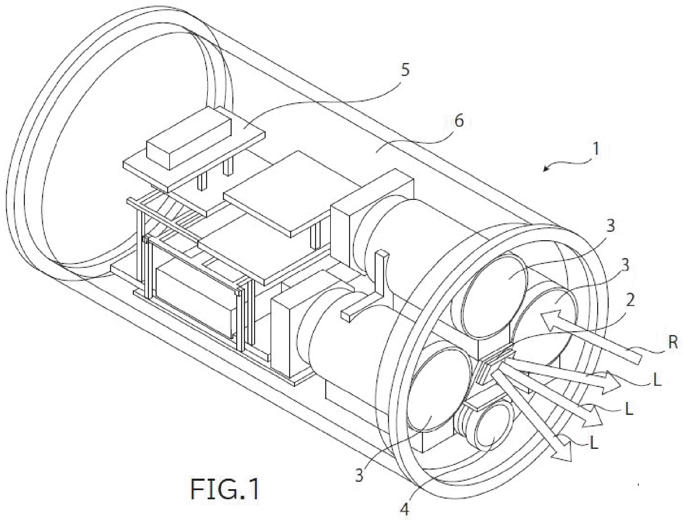

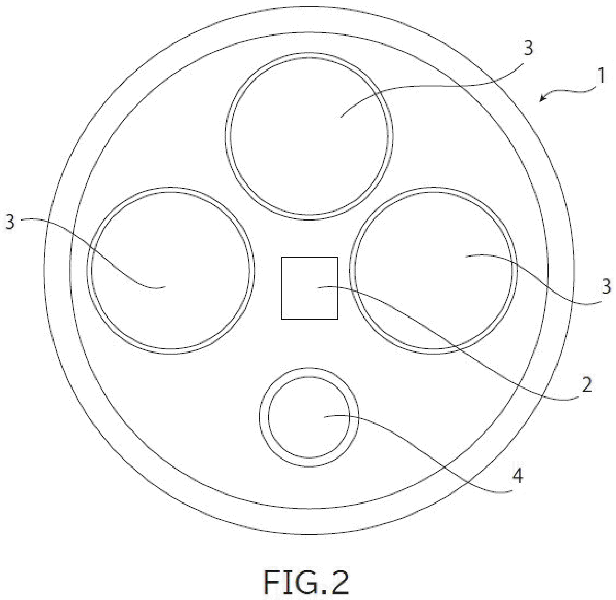

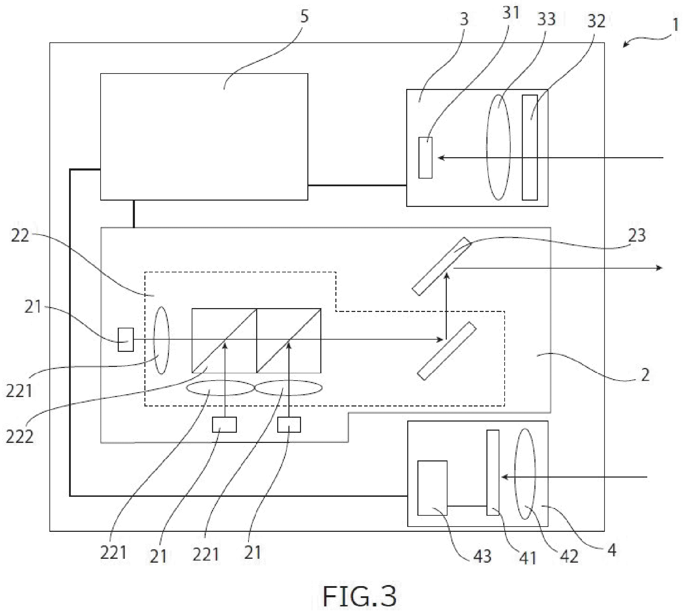

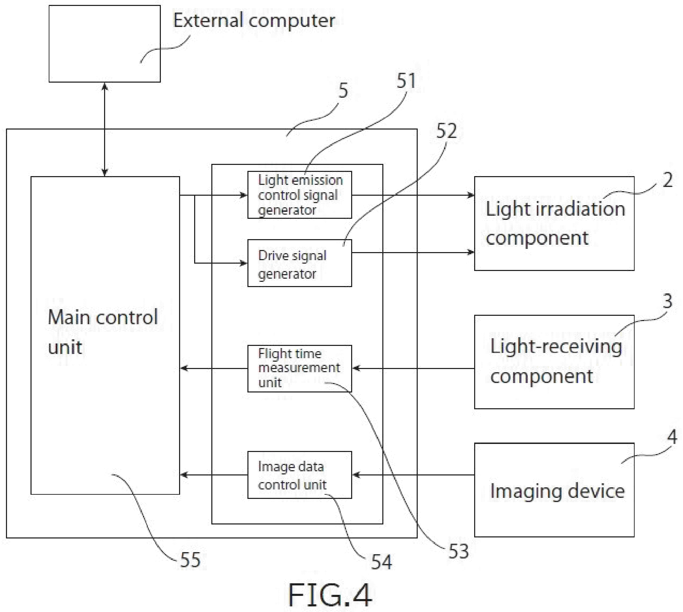

FIG. 1 is a schematic diagram of an underwater monitoring device 1 according to this embodiment (hereinafter referred to as "the device"). FIG. 2 is a diagram showing the arrangement of the light irradiation component 2, the plurality of light-receiving components 3, and the imaging component 4 when the device 1 is viewed from the front. FIG. 3 is a schematic diagram showing a cross section of the device 1. FIG. 4 is a functional block diagram of the device 1.

As described above, the device 1 comprises a light irradiation component 2 that irradiates a plurality of laser beams L in a visible region, a plurality of light-receiving components 3 that receive reflected light R from each of the plurality of laser beams L irradiated by the light irradiation component 2, and an imaging component 4 that captures a forward region. The device 1 further includes a control component 5 that controls the light irradiation component 2, the plurality of light-receiving components 3, and the imaging component 4. In the device 1, the light irradiation component 2, the plurality of light-receiving components 3, the imaging component 4, and the control component 5 are housed in a housing 6 and sealed to prevent water from entering. With this configuration, the device 1 can monitor parameters such as a surrounding environment, a distance to a measurement object, and a color of the measurement object.

As is clear from the description in this specification, the device 1 is an apparatus used to measure the distance to an object to be measured underwater (hereinafter referred to as the "measurement object") and the reflectance characteristics of the measurement object. The device 1 is not limited thereto, and may be configured as a device fixed at a single location underwater for fixed-point observation, may be configured as an attachment-type device installed on a so-called underwater drone equipped with a power component such as a motor and capable of freely moving underwater, or may be configured as a part of the underwater drone by being combined with other components such as a power component of the underwater drone and housed integrally within a single housing.

The device 1 comprises a light irradiation component 2, as described above, capable of irradiating a plurality of laser beams L in the visible region. The light irradiation component 2 is not limited thereto as long as it has the above functions, but preferably includes a light source component 21, an optical path adjustment component 22, and an optical scanning component 23. Specifically, the light irradiation component 2 of the device 1 emits light from a light source component 21, and then the optical path of the light is adjusted by an optical path adjustment component 22 and the light is incident on an optical scanning component 23, which changes the direction (optical axis) of the light over time, specifically scanning the light.

Furthermore, as described above, the light source component 21 of the device 1 is a component capable of irradiating a plurality of laser beams L in a visible region, and is not limited thereto as long as it has this function. Preferably, the light source component is a laser diode (LD), a fiber laser, or the like, and from the standpoints of simplicity, space-saving, power-saving, and compactness, the light source component is more preferably a laser diode. Specifically, by using a laser diode, it is possible to easily irradiate desired light, and even when a laser diode is provided for each desired wavelength, space can be saved and power consumption can be reduced.

Furthermore, it is preferable that the wavelengths of the multiple laser beams emitted by the light source component 21 of the device 1 are all in the visible region, because light in the visible wavelength range is less likely to be absorbed by water than light in the wide wavelength range. In other words, by using a wavelength in the visible region, it is possible to achieve accurate distance measurement in water, which is less likely to be absorbed in water. The wavelength in the visible region will be described later, but specifically, it is preferable that it is in the range of 360 nm to 830 nm.

The device 1 uses laser beams of multiple wavelengths because wavelengths that are easily transmitted vary depending on various conditions (factors) such as the turbidity of water, including seawater, and wavelengths that are easily reflected by the measurement object also vary. That is, by using laser beams of multiple wavelengths, it becomes possible to select a suitable wavelength from among them, enabling highly accurate measurements. Furthermore, the number of wavelengths of the laser beams is not limited, but is at least 2, preferably at least 3, and more preferably at least 4. By using three or more wavelengths, it becomes possible to provide light in the respective color regions of red (R), green (G), and blue (B), thereby enabling wavelength regions that are easily transmitted and reflected in water to be sufficiently distinguished, as described above and below.

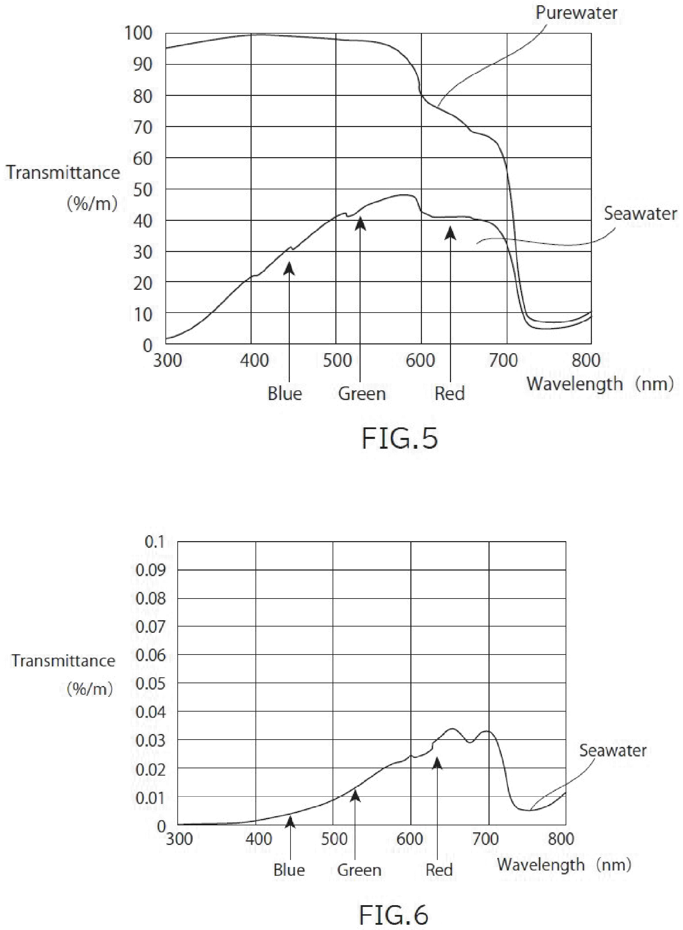

An illustrative diagram showing that a suitable wavelength differs depending on conditions is shown in FIGS. 5 and 6. FIG. 5 shows the transmittance of seawater in a certain port area in Japan during spring as a function of wavelength. FIG. 6 shows the transmittance of seawater in another port area in Japan during summer as a function of wavelength. As shown in these figures, the maximum transmittance varies depending on various conditions such as the turbidity and the location of measurement. Specifically, in the example of FIG. 5, light with a green (G) wavelength has the highest transmittance, while in the example of FIG. 6, light with a red (R) wavelength has the highest transmittance. In other words, as shown in these figures, the optimal wavelength varies greatly depending on the environment, so by using laser beams of multiple wavelengths, it is possible to select a laser beam with the wavelength that is most suitable for the situation.

Here, the preferred wavelength range is the visible region, as described above, specifically the range of 360 nm to 830 nm. Furthermore, as described above, when the device 1 uses laser beams of multiple different wavelengths, it is preferable that the laser beams be in at least one of the red (R), green (G), and blue (B) color regions. In the case of red (R), the wavelength is preferably in a range of 620 nm to 830 nm; in the case of green (G), the wavelength is preferably longer than 500 nm and 600 nm or less; and in the case of blue (B), the wavelength is preferably in a range of 430 nm to 500 nm. Furthermore, by using these wavelengths, it becomes possible to employ the three primary colors of light, namely red (R), green (G), and blue (B), thereby enabling not only LiDAR-based measurement of the distance to a measurement object but also acquisition of various types of information, as described below.

The optical path adjustment component 22 of the device 1 is a component for appropriately changing and adjusting the optical path of the laser beam emitted by the light source component 21 and guiding it to a desired direction and position. Specific examples of the optical path adjustment component 22 include, but are not limited to, a lens 221 that focuses or collimates the laser beam emitted from the light source component 21, and an optical component (dichroic mirror) 222 that combines the laser beams of each color.

The optical scanning component 23 of the device 1 is a component that can change the direction (optical axis) of the light incident from the optical path adjustment component 22 over time. Examples of the optical scanning component 23 include, but are not limited to, a MEMS mirror, a polygon mirror, etc. The actual scanning movement of the optical scanning component will be described separately below.

Furthermore, as will be described later, the light irradiation component 2 of the device 1 is preferably disposed within a region surrounded by a plurality of light-receiving components 3, and therefore is preferably configured to be compact. Specifically, it is preferable to house the light source component 21, the optical path adjustment component 22, and the optical scanning component 23 within a cylindrical light irradiation component housing 24. With this configuration, the device can be made compact. In this case, a cross-sectional image of the light irradiation component 2, the light-receiving component 3, and the imaging component 4 is as shown in FIG. 3.

The light-receiving component 3 of the device 1 receives the reflected light from each of a plurality of laser beams in the visible region L irradiated by the light irradiation component 2, as described above. According to the device 1, the light irradiated from the light irradiation component 2 hits the measurement object and becomes scattered light, but a part of the scattered light returns to the device 1 as reflected light. By detecting this light with the light reception element 41, it is possible to obtain the necessary information as will be described later.

As described above, the device 1 includes a plurality of light-receiving components 3. The reason for providing a plurality of light-receiving components 3 is that the light irradiation component 2 irradiates a plurality of laser beams in the visible region L, and it is therefore necessary to receive reflected light corresponding to each of the plurality of laser beams in the visible region L.

The light-receiving component 3 of the device 1 is not limited thereto as long as it has the above-described functions, but is preferably configured to output an electrical signal based on the received light. Specifically, examples include a photoelectric conversion element 31, a band-pass filter 32 arranged in front of the photoelectric conversion element 31, and optical elements such as a lens 33. The photoelectric conversion element 31 is not limited to, but may be , for example, a phototransistor, a photodiode, a phototube, a photomultiplier tube, etc. This allows the received laser beam to be output to the control component 5 as an electrical signal.

The imaging component 4 of the device 1 is a device that can receive light input from the outside and create an image. The use of the imaging component 4 has the advantage that information about the surroundings of the device 1 can be obtained as an image together with color information.

More specifically, the imaging component 4 is preferably a so-called camera device, and more specifically, it preferably comprises a light reception element 41, an optical element such as a lens 42 provided in front of the light reception element 41, and a camera control component 43 connected to the light reception element 41.

The light reception element 41 of the imaging component 4 is an element that receives light and outputs an electrical signal based on the received light. This electrical signal is then input to the camera control component 43, which then creates image data based on this electrical signal. From this perspective, the light reception element 41 can be, but is not limited to, a photoelectric conversion element such as a CCD or CMOS. In this case, the camera device is preferably a so-called RGB camera, in which a light reception element 41 is provided for each of the three primary colors of light (red (R), green (G), and blue (B)). The use of an RGB camera has the advantage that it is possible to obtain color information underwater and obtain images, and furthermore, by combining this with distance information, it is possible to obtain a wider variety of information.

Furthermore, the camera control component 43 receives the electrical signal output from the light reception element 41 as described above and creates image data. Image data refers to data that includes image information, and this image data is output to the outside of the camera control component 43 and displayed as an image on a display device or the like. Furthermore, a specific example of the camera control component 43 includes, but is not limited to, a printed circuit board or the like in which resistors, capacitors, IC chips, and the like are arranged on a substrate provided with metal wiring, and connected by the metal wiring to form an electronic circuit that receives an electrical signal from the light reception element and generates image data.

In the device 1, the light irradiation component 2 is preferably arranged within an area surrounded by a plurality of light-receiving components 3 and an imaging component 4. By creating an area surrounded by the light irradiation component 2 and the light-receiving component 3, it is possible to make the distance between the light irradiation component 2 and each of the multiple light-receiving components 3 as uniform as possible when the laser beam travels back and forth. In addition, it is possible to lay out the optical system that emits the laser beam, i.e., the light source component 21 and the optical path adjustment component 22, which require more precise handling, at a position offset from the multiple light-receiving components 3 within the housing 6. This has the effect of facilitating precise adjustment work and reducing the external size of the housing. In the device 1, the number of light-receiving components 3 is preferably equal to the number of wavelengths emitted by the light irradiation component 2, i.e., the number of light source components 21, and is preferably three or more to correspond to the red (R), green (G) and blue (B) regions, respectively, but may be four or more, more preferably five or more, as long as the installation area is secured.

The control component 5 of the device 1 is electrically connected to the light irradiation component 2, the light-receiving component 3, and the imaging component 4, and serves to control these components. This enables various processes to be performed, and the distance to the measurement object can be measured with high accuracy.

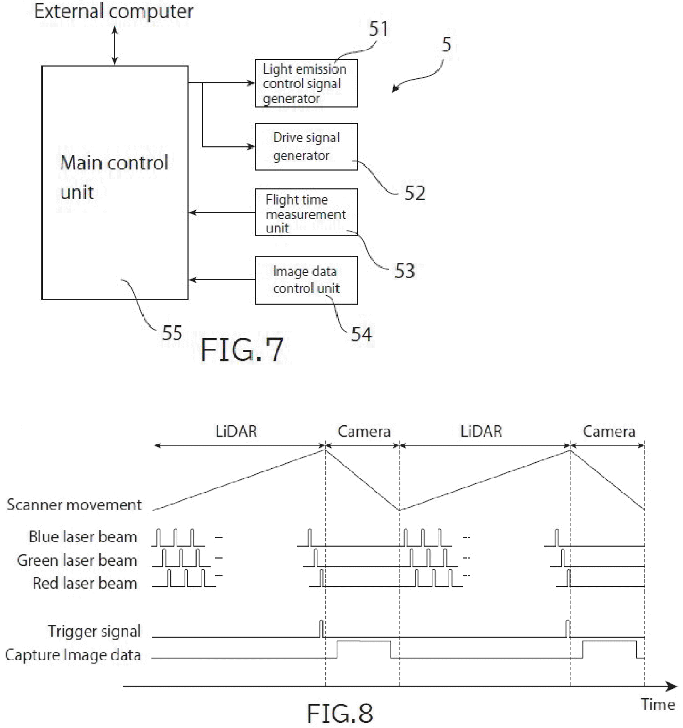

FIG. 7 is a functional block diagram of the control component 5 of the device 1. As shown in this diagram, the control component 5 of the device 1 is composed of a light emission control signal generator 51, a drive signal generator 52, a flight time measurement unit 53, an image data control unit 54, and a main control unit 55. In the example shown in this diagram, the device 1 is connected to an external computer or the like via wired or wireless connection, and receives commands from the operator of the device 1 and performs the desired processing.

The control component 5 of the device 1 is not limited as long as it has the above-mentioned functions, and can be realized in various configurations. For example, similar to the camera control component 43, it may be a printed circuit board or the like in which resistors, capacitors, IC chips, etc. are arranged on a plastic substrate on which metal wiring is formed, and these are connected by the above-mentioned metal wiring to form an electronic circuit that receives electrical signals from the light reception element and/or image data generated by the camera control component. Furthermore, it is preferable that this printed circuit board is not only configured with a so-called gate array that performs predetermined processing, but also with a programmable so-called FPGA (Field-Programmable gate array).

The light emission control signal generator 51 in the control component 5 generates a light emission control in response to an external command signal and outputs it to the light irradiation component 2, and the light irradiation component 2 emits light based on this.

As is clear from the above description, the light emission control generated by the control component 5 is a signal that is incident on the light irradiation component 2, more specifically, on the light source component 21. The light source component 21 can emit a predetermined amount of light based on this light emission control. It is also preferable to generate as many light emission controls as there are light source components 21, more specifically, as many light source components 21 that emit light. FIG. 8 shows an example of the waveform of light emission control generated by this control component 5. In the example shown in this figure, a pulsed light emission control is input to each of the three light sources of red (R), green (G), and blue (B).

Furthermore, the waveform of the light emission control is not limited as long as it can emit light from the light source component 21 and achieve the effects of the device 1, but it is preferable that it be a pulsed waveform that occurs at regular intervals, as shown in this figure. This makes it possible to improve the peak value of the laser beam, which has the effect of enabling more accurate measurements in highly turbid scenes.

Furthermore, when multiple light source components 21 are provided, it is preferable that the light emission control waveforms are configured so that the light is emitted at different times. By slightly shifting the time, the angle of the laser beam emitted into space will be slightly different, which has the advantage of making it possible to irradiate a large number of measurement points.

The drive signal generator 52 in the control component 5 of the device 1 generates a drive signal, which is a signal for controlling the optical scanning component 23 in the light irradiation component 2. The optical scanning component 23 is driven by the drive signal generator 52, enabling the laser beam generated by the light source component 21 to be emitted in a desired direction. The waveform of the drive signal can be adjusted as appropriate depending on the type of optical scanning component 23 used.

The control component 5 also includes a flight time measurement unit 53. The flight time measurement unit 53 calculates time-of-flight data and distance data based on the electrical signal received from the light-receiving component 3. Theoretically, the time-of-flight data can be calculated as the difference between the time data when the light irradiation component 2 irradiates light and the time data when the light receiving component 3 receives light. In other words, the "time-of-flight data" refers to data that contains information about the time that light travels (time of flight). Furthermore, if this time-of-flight data is known, by multiplying this time-of-flight data by the speed-of-light data, which contains information about the speed of light, it is possible to measure the round-trip flight distance data of the laser beam (half of this is the distance between the device 1 and the measurement object). In other words, "distance data" refers to data that includes information about a distance between the device 1 and the measurement object, the distance being obtained by multiplying the time-of-flight data by speed-of-light data and dividing the result by two. The device 1 is intended to be used in a medium, more specifically, in water, and for more accurate measurements, it is preferable to use data on the speed-of-light in a medium, more specifically, in water. The acquired distance data is output to the main control unit 55.

The control component 5 also includes an image data control unit 54. The image data control unit 54 is connected to the imaging component 4 and receives image data from the imaging component 4 (acquires image data), and is a component for controlling the timing of this image acquisition. More specifically, the device 1 has a light irradiation component 2 and a light-receiving component 3 to measure the distance to the measurement object, which is called a LiDAR function, and also has an imaging component that can directly capture images. However, when an image is captured using an imaging component, if light from the light irradiation component 2 is reflected back to the device 1, the reflected light will be recognized as a bright spot, which may cause noise in the image. Therefore, this noise can be removed by providing the image data control unit 54. An image of this case is shown in the same diagram (FIG. 8) as the light emission control.

As shown in the figure, the image data control unit 54 issues a trigger signal at regular intervals in synchronization with the time period when the LiDAR is not measuring. After issuing this trigger signal, the image data control unit 54 captures image data for a certain period of time. This has the advantage that, as described above, it is possible to obtain an image of the surroundings excluding the period in which the bright spots are generated. The obtained image data is output to the main control unit 55.

The main control unit 55 is connected to the light emission control signal generator 51, the drive signal generator 52, the flight time measurement unit 53, and the image data control unit 54, and performs overall control, that is, main control. The main control unit 55 acts as a relay point that records various data, such as distance data input from the flight time measurement unit 53 and image data input from the image data control unit 54, and outputs the data to an externally connected computer, etc.

Here, the underwater distance measurement method (underwater monitoring method (hereinafter referred to as "the method")) realized by the device 1 will be described.

First, the method includes the steps of: (S1-1) irradiating a plurality of laser beams in the visible region; (S1-2) receiving reflected light from each of the plurality of laser beams in the visible region; and (S1-3) selecting, from the plurality of reflected lights received, reflected light having the strongest signal strength as measurement light.

First, the method includes the step (S1-1) of irradiating the visible region with multiple laser beams. As is clear from the above description, this step is performed by the light irradiation component 2. In this step, as described above, it is preferable to emit multiple laser beams with different wavelengths at different times, but multiple laser beams with different wavelengths may be irradiated simultaneously as long as the light-receiving component 3 can sufficiently separate the light of the multiple wavelengths.

In addition, in this method, the laser beam in the visible region is irradiated multiple times, but as mentioned above, the wavelength range that is easily transmitted varies depending on the underwater conditions, such as turbidity. Therefore, to maximize accuracy, it is preferable to start measurement by using the laser beam with the wavelength that has the highest reflected signal strength ratio among the laser beams with the multiple different wavelengths (if the irradiation intensity is the same, it is preferable to use the laser beam with the highest reflected light signal strength). This allows for measurements with the highest accuracy. The wavelength selection may also vary depending on the sunlight entering the water, so it is preferable to irradiate the water with laser beams of different wavelengths again after a certain period of time has passed and compare their signal strengths. Of course, it is also preferable to irradiate the water with light of multiple wavelengths simultaneously or at different times during the measurement.

Although there are no limitations on the selection of this wavelength, it is preferable to select the wavelength that has the highest signal strength in the following formula. $S = k \times {R}_{λ} \times {{T}_{λ}}^{2} \times P s$

In the above equation, S is the signal strength, k is a proportionality constant, Rλ is the reflectance of the measurement object at wavelength λ, Tλ is the transmittance of the outbound and inbound paths at wavelength λ, and Ps is the source power of the light source component. In this formula, it can be assumed that the transmittance in air is nearly 100% (T=1). Since k, Rλ, and Ps are involved in the formula, the reflectance of the measurement object in air can be determined by measuring the signal strength while changing Ps at least three times. Then, by performing a similar measurement underwater, the transmittance of seawater at wavelength λ can be determined. By substituting the seawater transmittance at each wavelength as T into the above equation in advance, the reflectance of the measurement object underwater can be calculated. By selecting the wavelength that yields the largest signal strength S, measurement accuracy can be improved.

Even more advantageously, LiDAR can measure distance, so it can determine the transmittance per unit distance, as shown on the vertical axis in Figures 5 and 6. This means that the reflectance of the measurement object can be determined at any distance, as long as the measurement object is within the measurable range.

In addition, in underwater monitoring devices equipped with both LiDAR and a camera, such as the device, knowing the distance from the LiDAR to the measurement object can be used to improve the image quality of the camera.

Underwater camera images appear bluish because light in the red wavelength band is absorbed and the red component attenuates with increasing distance.

Therefore, in conventional systems equipped only with underwater cameras, the camera itself does not have the ability to measure distance, so in order to restore the original color, complex image processing techniques have been used to first estimate the distance to the subject and then adjust the color of the photo (see, for example, Reference 1 (https://openaccess.thecvf.com/content_CVPR_2019/papers/Akkaynak_Sea-Thru_A_Method_for_Removing_Water_From_Underwater_Images_CVPR_2019_ paper.pdf)). However, such conventional methods reduce the accuracy of color restoration and require enormous computational resources for subsequent processing, including long processing times on high-performance computers. If a LiDAR and a camera are installed simultaneously, as in the present method, color restoration can be performed using distance values obtained by the LiDAR, thereby enabling the task to be completed accurately and in a short time.

Furthermore, the wavelength of light to be selected as a preferred wavelength can be appropriately adjusted depending on the purpose of monitoring, and the following examples may be considered.

The purpose of monitoring may be to emphasize structural measurement of the measurement object, i.e., to obtain 3D data of the measurement object with high accuracy and high resolution (Case A), or to measure the reflectance characteristics of the measurement object, i.e., to identify or classify the material of the object by measuring its reflectance characteristics in a manner similar to multispectral measurement (Case B).

On the other hand, there are two ways of operating the device: measuring at only one wavelength per unit time (Case 1), and using three wavelengths simultaneously (Case 2). In other words, there are four possible combinations of Cases A and B and Cases 1 and 2. The algorithm for using lasers with this combination is shown in Table 1. While it would be ideal if a device were equipped with three wavelengths so that it could always perform measurements using all three wavelengths, there are cases where, for example, (1) distance calculations cannot be performed simultaneously for all three wavelengths per unit time due to limitations in the processing power of the distance calculation circuitry in the subsequent stage, or (2) when mounted on an underwater drone (such as the aforementioned ROV or AUV), low power consumption is desirable in order to extend the duration of a single dive measurement. Therefore, for Case A and Case B, there can be Case 1 and Case 2, respectively, so there are four use cases in total. Table 1 summarizes this.

### [table 1]

**Table 1**

| | **[Case A] Emphasis on Structural Measurement** | **[Casa B] Emphasis on Reflectance Characteristics Measurement** |
|---|---|---|
| | This corresponds to the case where the structural measurement result is prioritized, by selecting the wavelength with the maximum Signal Strength of the Light-receiving component to improve the accuracy of the measurement result, and increasing the number of measurement points for high definition. | This is applicable to the case where identification or classification of a substance is performed by executing measurement with Laser beams of multiple wavelengths and determining the Reflectance characteristics of the Measurement object at each wavelength. |
| **[Case 1] Measurement is performed with a single wavelength per unit time.** | • To improve the accuracy of the measurement result and increase the amount of return light to the light-receiving component to obtain a high-definition structural measurement line image by increasing the number of measurement points. | • When measuring the reflectance at each wavelength of the Measurement object with one wavelength per unit time, the following three methods for using the wavelength are conceivable: |
| **Reason:** Due to the processing capability of the subsequent calculation unit circuit, to reduce power consumption (and so on) | • For this purpose, a preliminary survey is conducted prior to the actual measurement operation. | |
| | • The preliminary survey involves causing the Laser beam 17to emit and executing measurement for each wavelength, and determining the wavelength having the largest Signal Strength (*I_{S}*)18 among the wavelengths, where *Iₛ* = *E* × *R* × *T* × *Pₛ* | |
| | | • 1. Vary the wavelength for each frame. |
| | | • 2. Vary the wavelength for each line. |
| | | • 3. Vary the wavelength for each point. |
| | | • "Per unit time" is the key point. This implies that if all wavelengths cannot be used due to the processing capability or power consumption of the subsequent Control device, only one wavelength is utilized during a certain unit time. |
| | • The actual measurement operation is then performed using the laser beam of that particular wavelength. | |
| | • If the strongest wavelength changes due to a high-turbidity environment, the actual measurement operation is performed again using the strongest wavelength determined by the preliminary survey. (and so on) | |
| **[Case 2] Measurement Is performed using all three wavelengths per unit time.** | • To increase the number of measurement points for a high-definition line image. | • **In** this case, the three-wavelength Laser beams irradiate the same point, and the reflection is measured simultaneously. |
| | • Specifically, the following two methods are conceivable: | • A prerequisite is that the measured Reflectance characteristics of each wavelength have a certain degree of accuracy, and that a certain degree of Signal Strength is obtained for each wavelength. |
| | • First, the emission optical axes of the three-wavelength Laser beams are intentionally shifted so as not to overlap during the initial optical axis adjustment stage of the assembled device. This makes it possible to increase the number of photometric points. | |
| | | . **It** becomes possible to measure the Reflectance characteristics at a single point, which provides the largest amount of information. |
| | • Alternatively, even if the optical axes are aligned when the device is assembled, temporally shifting the irradiation time of the three-wavelength Laser beams makes it possible to obtain a high-definition structural measurement line image by increasing the number of photometric points per frame. | |

In Table 1, for example, measuring 3D data of a structure when the turbidity is high corresponds to Case A. Therefore, if there are no constraints on the downstream processing capacity or power consumption of the device, 3D data can be obtained using three wavelengths simultaneously, but if there are constraints, as shown in Table 1, a preliminary survey is first conducted, that is, a survey is conducted by emitting a laser for each wavelength, and the signal strength S shown in Equation 1 is found for each wavelength to determine the strongest one. Then, measurement is performed using the laser having the selected wavelength. After a predetermined time has elapsed, the preliminary survey is performed again, and if a different wavelength exhibits the highest signal strength, measurement is subsequently performed using the laser having that wavelength. As a result, effective three-dimensional data can be acquired even in waters having high turbidity.

In addition, in this method, it is preferable to irradiate the laser beam while scanning it in the visible region. Because the cross-sectional area of the emitted laser beam is a substantially point-like area, even when the laser beam is incident on the measurement object, all that can be measured is the distance to the point on the measurement object. Therefore, by irradiating while scanning, it is possible to measure distances over a wide area by finding the distances at multiple points. This scanning can be achieved by the optical scanning component 23 described above.

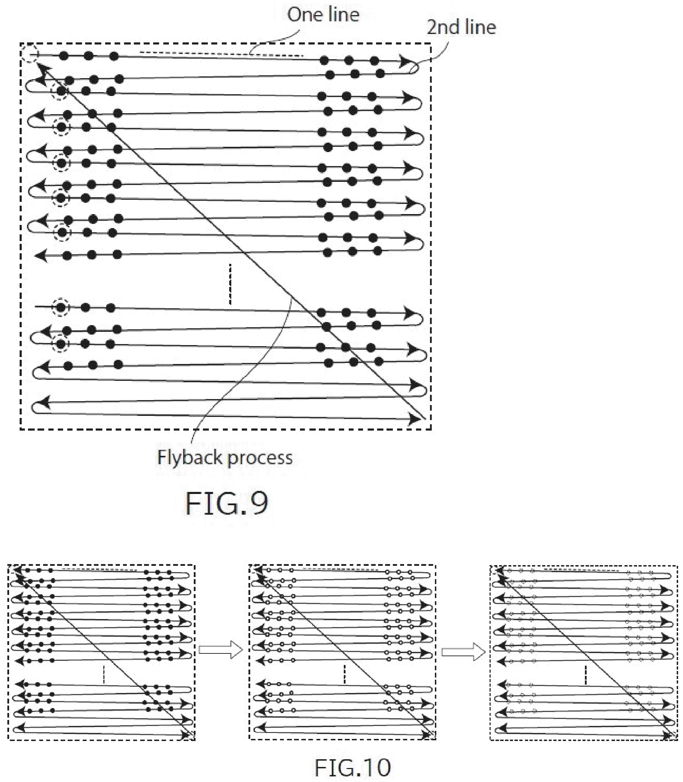

The light scanning is not particularly limited, but examples include raster scanning and rotational scanning. However, when considering a case where a typical light reception element 41 uses a photoelectric conversion element such as a CCD or CMOS, raster scanning is preferred as it is simpler, as it corresponds to the cells arranged in a grid pattern of the photoelectric conversion element. An example of raster scanning is shown in FIG. 9. In raster scanning, scanning starts from one corner (the upper left corner in the figure, where the left vertical line and the upper horizontal line intersect) and moves gradually down (moving from the upper horizontal line to the lower horizontal line) to the other vertical line (the right vertical line) (this is called "one line"). The scan then reverses direction and returns to the opposite vertical line (the left vertical line), and subsequently reverses again. This back-and-forth operation is repeated until the scan reaches the other corner (the intersection of the right vertical line and the bottom horizontal line at the lower right in the figure). As a result, the entire predetermined region can be scanned without omission. After reaching the other corner (the bottom right in the figure), the scan head is returned linearly to one corner (the top left in the figure) in a non-emitting state, without performing measurement, and scanning is then restarted as the next frame.

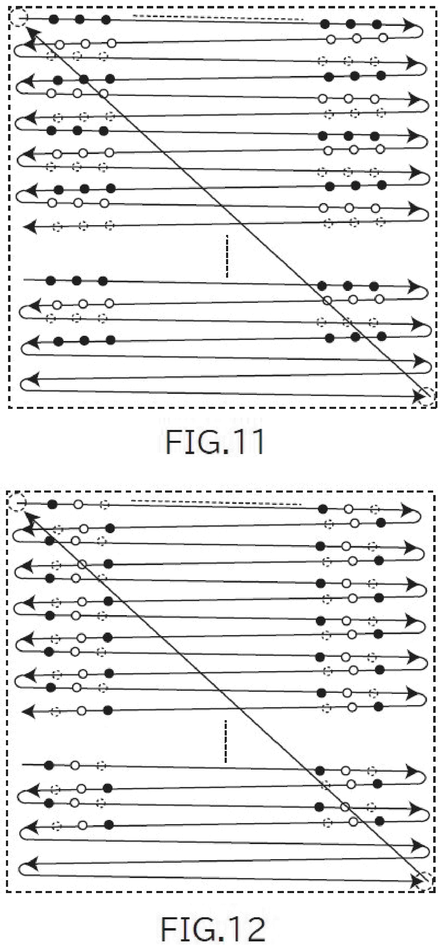

When irradiating multiple laser beams of different wavelengths, if multiple laser beams are irradiated simultaneously, they will be irradiated at the same position during scanning. However, if each laser beam is emitted at a different time, various methods are possible. For example, as shown in FIG. 10, a laser beam of a different wavelength may be emitted for each frame. Alternatively, as shown in FIG. 11, one line may have one wavelength, the next line another wavelength, and the next line another wavelength, so that the wavelength of light emitted varies for each line. Alternatively, as shown in FIG. 12, a laser beam of one wavelength may be emitted with one pulse, a laser beam of another wavelength may be emitted with the next pulse, and a laser beam of yet another wavelength may be emitted with the next pulse.

In addition, the method preferably includes a step (S1-1-2) of acquiring image data of a forward region during intervals of scanning. As described above, it is possible to measure the distance to a measurement object by irradiating a laser beam from the light irradiation component 2 and receiving the reflected light with the light-receiving component 3. However, there is a problem in that this reflected light enters the imaging component 4 and appears as a bright spot, making it difficult to see the image of the forward region. Therefore, this step has the advantage that noise caused by this reflected light can be eliminated by acquiring image data using the imaging component 4 during the interval (the non-emission time during which the light returns linearly from the other corner to the one corner). An example of this is shown in FIG. 8.

As described above, the device 1 can provide an underwater monitoring device and an underwater monitoring method that take into account the turbidity in the water, can adapt to various turbidity conditions, and has high measurement accuracy.

In particular, the device 1 may be configured to perform measurements by irradiating laser beams of multiple different wavelengths, as described above, or may be configured to perform measurements by employing a single beam of returning light with the highest signal strength (signal strength ratio), each of which has its own advantages. This will be explained in detail below.

### (A) Measurement at a Single Wavelength

When measurement is performed at a single wavelength, an advantage is obtained in that a greater number of measurement points can be secured thereby improving measurement accuracy compared to measurements at multiple wavelengths. In particular, there is an advantage in that the measurement accuracy is further improved if light with the highest signal strength (signal strength ratio) of the reflected light is used. In particular, distance measurement calculations are subject to processing limitations of the control component and external computers. Therefore, using a single wavelength has the advantage of reducing the calculation load.

### (B) Measurements at Multiple Wavelengths

Even when measurement is performed at a single wavelength, a pulse-shaped signal inevitably includes an interval (blank period).
Therefore, if a laser beam of another wavelength is irradiated during this interval, it becomes possible to further increase the overall time resolution without wasting the interval and without reducing the time resolution for measurements at a single wavelength.
This is as shown in FIG. 8. As a result, more accurate measurements can be achieved.

Furthermore, by combining the light irradiation component 2 and the light-receiving component 3, the device 1 can obtain three-dimensional information including depth, based on distance information between the device 1 and the measurement object. On the other hand, the imaging component 4 can obtain a planar image having color information. By combining such image information with distance information obtained by the light irradiation component and the light-receiving component, it becomes possible to obtain three-dimensional color image information having depth. Although the device 1 can obtain color-related information by using laser beams of multiple different wavelengths as described above, such information is based merely on the intensity of light reflected from the irradiated light. Therefore, by superimposing and associating information on the intensities of reflected light corresponding to the different wavelengths with color information obtained from the imaging component 4, more detailed information can be obtained. Furthermore, by using a high-resolution camera, it is possible to add advanced recognition functions by combining it with AI (Artificial Intelligence) technology. Also, when acquiring the learning data (teaching data) required for AI, the 3D measurement function obtained from LiDAR makes it possible to acquire more comprehensive data.

### [Industrial applicability]

The present invention has industrial applicability as an underwater monitoring device and an underwater monitoring method.

### [Reference signs list]

- 1: ···Underwater monitoring device
- 2: ···light irradiation component
21 ···light source component
22 ···optical path adjustment component
221 ···lens
222 ···optical component (dichroic mirror)
23 ···optical scanning component
- 3: 3···light-receiving component
31 ···photoelectric conversion element
32 ···band-pass filter
33 ···lens
- 4: ···imaging component
41 ···light reception element
42 ···lens
43 ···camera control component
- 5: ···control component
51 ···light emission control signal generator
52 ···drive signal generator
53 ···flight time measurement unit
54 ···image data control unit
55 ···main control unit

## Claims

1. An underwater monitoring device comprising:
a light irradiation component configured to irradiate a plurality of visible-region laser beams ;
a plurality of light-receiving components configured to receive reflected light of the respective laser beams irradiated by said light irradiation component; and
an imaging component configured to capture a forward region.

2. The underwater monitoring device according to claim 1,
wherein said light irradiation component is disposed within a region surrounded by said plurality of light-receiving components and said imaging component.

3. The underwater monitoring device according to claim 1,
wherein said laser beams have wavelengths in a range of 360 nm to 830 nm.

4. The underwater monitoring device according to claim 1,
wherein said light irradiation component includes an optical scanning component.

5. The underwater monitoring device according to claim 1,
wherein said imaging component is an RGB camera.

6. The underwater monitoring device according to claim 1, further comprising :
a control component configured to control said light irradiation component, said light-receiving components, and said imaging component.

7. An underwater monitoring method comprising:
irradiating a plurality of laser beams in a visible region;
receiving reflected light corresponding to each of said laser beams in the visible region; and
selecting at least a part of the plurality of received reflected light as measurement light.

8. The underwater monitoring method according to claim 7,
wherein said reflected light having a highest signal strength is selected as said measurement light.

9. The underwater monitoring method according to claim 7,
wherein said laser beams in said visible region are irradiated while being scanned, and
image data of a forward region is acquired at intervals of said scanning.

10. The underwater monitoring method according to claim 9,
wherein said scanning is raster scanning.

11. The underwater monitoring method according to claim 9,
wherein said laser beams in the visible region are pulsed light.
